**Europäisches Patentamt**

**European Patent Office**

**Office européen des brevets**

(19)

(11) Numéro de publication : **0 371 833 B1**

(12) **FASCICULE DE BREVET EUROPEEN**

(45) Date de publication du fascicule du brevet :
**12.08.92 Bulletin 92/33**

(51) Int. Cl.$^5$ : **B24B 19/02, F16D 3/20**

(21) Numéro de dépôt : **89402951.1**

(22) Date de dépôt : **25.10.89**

(54) **Procédé et dispositif de finition d'une portée sphérique concave sur un segment de galet, notamment pour joint homokinétique.**

(30) Priorité : **18.11.88 FR 8815008**

(43) Date de publication de la demande :
**06.06.90 Bulletin 90/23**

(45) Mention de la délivrance du brevet :
**12.08.92 Bulletin 92/33**

(84) Etats contractants désignés :
**DE ES GB IT**

(56) Documents cités :
**FR-A- 2 594 505**
**FR-A- 2 622 663**
**GB-A- 2 199 113**
**GB-A- 2 210 952**
**US-A- 3 030 739**
**US-A- 4 593 444**

(73) Titulaire : **GLAENZER SPICER**
**10 Rue J.P. Timbaud**
**F-78301 Poissy (FR)**

(72) Inventeur : **Orain, Michel**
**10, Rue des Côtes de Vannes**
**F-78700 Conflans Sainte Honorine (FR)**

(74) Mandataire : **Kohn, Philippe et al**
**c/o CABINET LAVOIX 2, place d'Estienne d'Orves**
**F-75441 Paris Cédex 09 (FR)**

EP 0 371 833 B1

Jouve, 18, rue Saint-Denis, 75001 PARIS

**Description**

La présente invention concerne un procédé de finition d'une portée de tourillonnement sphérique concave sur un segment de galet comprenant une surface extérieure de roulement, ce segment de galet étant destiné notamment à faire partie d'un joint de transmission pour automobile.

La présente invention concerne également un dispositif pour procéder à un tel usinage.

L'invention vise en particulier mais non limitativement des segments de galet destinés à faire partie d'un joint de transmission comprenant trois tourillons sphériques formant tripode à l'extrémité de l'un des deux arbres reliés par le joint. Selon le sens du mouvement à transmettre, chaque tourillon sphérique s'appuie par l'intermédiaire d'un segment de galet sur l'un ou l'autre de deux chemins de roulement longitudinaux respectifs ménagés à l'intérieur d'un bol fixé à l'autre des deux arbres reliés par le joint. Six segments de galet sont donc interposés chacun entre l'un des chemins de roulement et le tourillon respectif. Chaque segment de galet a une portée sphérique concave tourillonnant sur le tourillon sphérique, et une surface extérieure de roulement torique qui est capable de rouler sur le chemin de roulement et de s'incliner latéralement relativement au chemin de roulement qui a un profil cylindrique concave. Ces joints homocinétiques coulissants présentent les qualités de confort et de compacité requises pour l'équipement des automobiles modernes. Ils sont décrits dans la demande de brevet FR-A-2 607 883.

Les performances remarquables de ces joints découlent pour une grande part de la lubrification hydrodynamique de l'articulation sphérique entre le tourillon sphérique et la portée sphérique concave du segment. Cette lubrification hydrodynamique annule pratiquement la trainée de glissement résultante tout en acceptant des pressions élevées pour le transfert de charge. La constitution du film extrêmement mince de lubrifiant - compte tenu des faibles vitesses de glissement - implique une parfaite complémentarité des surfaces.

On connaît des procédés d'usinage de la portée de tourillonnement concave sphérique qui ne permettent de réaliser qu'une complémentarité approximative. Ces procédés impliquent donc des étapes complémentaires de rodage des deux surfaces l'une sur l'autre selon on procédé utilisé dans la fabrication des lentilles optiques. La nécessité d'un tel rodage est incompatible avec les impératifs de prix de revient et de cadence de l'industrie automobile.

Le but de la présente invention est ainsi de proposer un moyen industriel de réaliser des segments à portée concave sphérique avec une précision permettant une parfaite complémentarité avec les tourillons sphériques du tripode destinés à coopérer avec ces segments, et autorisant donc dans le joint homocinétique la lubrification hydrodynamique par film de lubrifiant micrométrique, sans nécessité de rodage.

Suivant l'invention, le procédé pour usiner une portée sphérique concave sur un segment de galet ayant une surface extérieure de roulement, notamment segment de galet pour joint de transmission pour automobile, est caractérisé en ce que :
– on immobilise le segment en appui de sa surface extérieure de roulement contre des moyens d'appui ;
– on fait tourner autour d'un axe passant par le centre voulu pour la portée sphérique un outil du genre meule ou analogue comportant une surface active de génération de sphère concave, et on établit entre les moyens d'appui et le segment d'une part, et l'outil d'autre part, un mouvement relatif de balayage autour d'au moins un axe coupant l'axe de rotation de l'outil au centre voulu pour la portée sphérique ; et
– on fait avancer l'outil le long de son axe de rotation vers le segment jusqu'à ce que la distance entre la portée sphérique et le centre voulu pour celle-ci soit égale au rayon voulu pour la portée sphérique.

Suivant un autre aspect de l'invention, le dispositif pour usiner une portée sphérique concave sur un segment de galet ayant une surface extérieure de roulement, notamment segment de galet pour joint de transmission pour automobile, est caractérisé en ce qu'il comprend :
– un bâti ;
– une monture supportée par le bâti et par rapport à laquelle le segment de galet peut être immobilisé avec un centre et/ou un axe de sa surface extérieure de roulement en position déterminée par rapport à ladite monture ;
– un outil rotatif du genre meule ou analogue présentant une surface active de génération de sphère concave centrée sur un axe de rotation de la meule ;
– des moyens pour créer entre l'outil d'une part et le segment et la monture d'autre part un mouvement relatif de balayage rotatif autour d'au moins un axe coupant l'axe de rotation de l'outil au centre voulu pour la portée sphérique ;
– des moyens pour déplacer l'outil le long de son axe géométrique de rotation ;
– des moyens pour interrompre l'avance de l'outil le long de son axe de rotation lorsque le centre réel de la portée sphérique coïncide sensiblement avec le centre voulu.

Comme l'axe de l'outil passe par le centre voulu pour la portée sphérique, et que le segment subit par rapport à l'outil un mouvement de balayage autour d'un axe passant par le centre voulu pour la portée sphérique, la sphère est exactement positionnée par rapport à la surface extérieure de roulement et présente le diamètre exact voulu à condition d'arrêter avec précision le mouvement d'avance de l'outil vers le segment.

Si l'usinage est un superfinissage par exemple par pierrage, on ne cherche qu'à éliminer les microprofils de la surface, sans changer les cotes du segment. On interrompt alors l'avance quand l'outil rencontre le segment, et compte tenu des particularités géométriques précitées, on est certain que la surface active de l'outil et la portée sphérique à usiner sont concentriques.

Si l'usinage est une rectification, opération qui affecte les cotes de la pièce, on poursuit l'avance jusqu'à ce qu'on détecte qu'au moins un point de la portée sphérique est à une distance du centre voulu qui est égale au rayon voulu. Compte tenu des particularités géométriques selon l'invention, on est alors certain que le centre de la surface active de la meule coïncide avec le centre voulu. On interrompt l'avance de travail et la portée sphérique obtenue est parfaitement positionnée par rapport à la surface extérieure de roulement.

Pour réduire l'amplitude du mouvement de balayage, pour optimiser le balayage de la portée sphérique par la meule, ou encore pour faciliter ou permettre un contrôle de la position de la portée sphérique au cours de l'usinage, il peut être avantageux que l'axe de la meule soit incliné par rapport à l'axe du mouvement relatif de balayage.

De plus, le procédé et le dispositif selon l'invention permettent de réaliser industriellement et sans coût supplémentaire, certaines caractéristiques très favorables au bon fonctionnement du joint auquel ce segment est destiné :

– a) Correction de sphéricité de la portée concave par application au segment d'efforts appropriés lors de l'usinage de façon que le contact effectif entre tourillon et portée concave sous charge soit aussi étendu que possible malgré la déformation du segment sous l'effet de la charge. La demande de brevet FR-A-2 621 660, publiée le 14 Avril 1989, enseigne que l'on peut simuler l'allure du segment sous charge réelle en appliquant aux deux extrémités du segment des efforts de compression tangentiels que l'on équilibre par un effort dirigé radialement vers l'intérieur appliqué à mi-longueur circonférentielle de la portée extérieure de roulement du segment. Par conséquent, si l'on usine la portée de tourillonnement alors que le segment est ainsi artificiellement chargé, la portée du segment sera exactement complémentaire du tourillon lorsque le segment subira sa charge nominale réelle.

– b) Positionnement précis du centre de la portée de tourillonnement, qui peut être légèrement excentré relativement au centre de la surface extérieure de roulement si l'on souhaite créer un effet de rappel du segment vers une position neutre dans laquelle la section d'appui contre le chemin de roulement est celle qui est située à mi-longueur circonférentielle du segment. Cet effet est obtenu si l'épaisseur radiale du segment croît légèrement depuis la section précitée vers chaque extrémité du segment.

– c) Réalisation précise de la cote d'épaisseur radiale du segment, permettant en fabrication de grande série, l'assemblage avec un jeu minimum des joints sans risques de coïncement.

– d) Dimensionnement très précis du diamètre sphérique de la portée concave, évitant la nécessité d'un appariage avec les portées sphériques convexes complémentaires du tripode elles-mêmes rectifiées.

D'autres particularités et avantages de l'invention ressortiront encore de la description ci-après.

Aux dessins annexés donnés à titre d'exemples non limitatifs :

– la figure 1 est une vue en coupe transversale d'une ébauche de segment de galet en cours de formage dans une presse, en fin de course du poinçon de la presse ;

– la figure 2 est une vue en coupe selon le plan II-II de la figure 1 ;

– la figure 3 représente l'ébauche terminée reposant dans la matrice vue de dessus ;

– la figure 4 est une vue de dessous représentant schématiquement le principe de maintien et de positionnement précis du segment de galet par la monture et un premier mode de rectification de la portée sphérique concave ;

– la figure 5 est une vue du segment depuis la droite de la figure 4 ;

– la figure 6 est une vue en bout du segment avec coupe d'un ber fixe selon le plan VI-VI de la figure 4 ;

– la figure 7 est une vue en coupe selon le plan VII-VII de la figure 4 ;

– la figure 8 est une vue analogue à la figure 4 mais représentant un exemple pratique de mise en oeuvre du principe de maintien illustré par la figure 4 ;

– la figure 9 est une vue en coupe selon le plan IX-IX de la figure 8 ;

– la figure 10 est une vue en coupe selon le plan X-X de la figure 8 ;

– la figure 11 est une vue analogue à la figure 4 mais concernant un deuxième exemple de mise en oeuvre du premier mode de rectification ;

– la figure 12 est une vue en coupe selon le plan XII-XII de la figure 11 ;

– la figure 13 est une vue analogue à la figure 11 mais montrant les bers fixes et mobile en cours d'usinage ;

– la figure 14 représente, en coupe, un exemple de mise en oeuvre d'un deuxième mode de rectification selon l'invention ;

– la figure 15 est une vue partielle en coupe selon le plan XV-XV de la figure 14 ;

– la figure 16 est une vue de la monture depuis la droite de la figure 14, le segment étant en place dans la demi-vue inférieure, et absent dans la demi-vue supérieure ;

– la figure 17 est une vue de la monture utilisable dans le cadre d'un troisième mode de rectification de la portée sphérique concave, en coupe selon le plan circonférentiel du segment ;

– la figure 18 est une vue en élévation de la monture de la figure 17, avec demi-coupe selon le plan XVIII-XVIII de la figure 17 ;

– la figure 19 est une vue d'une variante simplifiée du troisième mode de rectification, en coupe selon le plan circonférentiel du segment ; et

– la figure 20 est une vue en coupe selon le plan XX-XX de la figure 19.

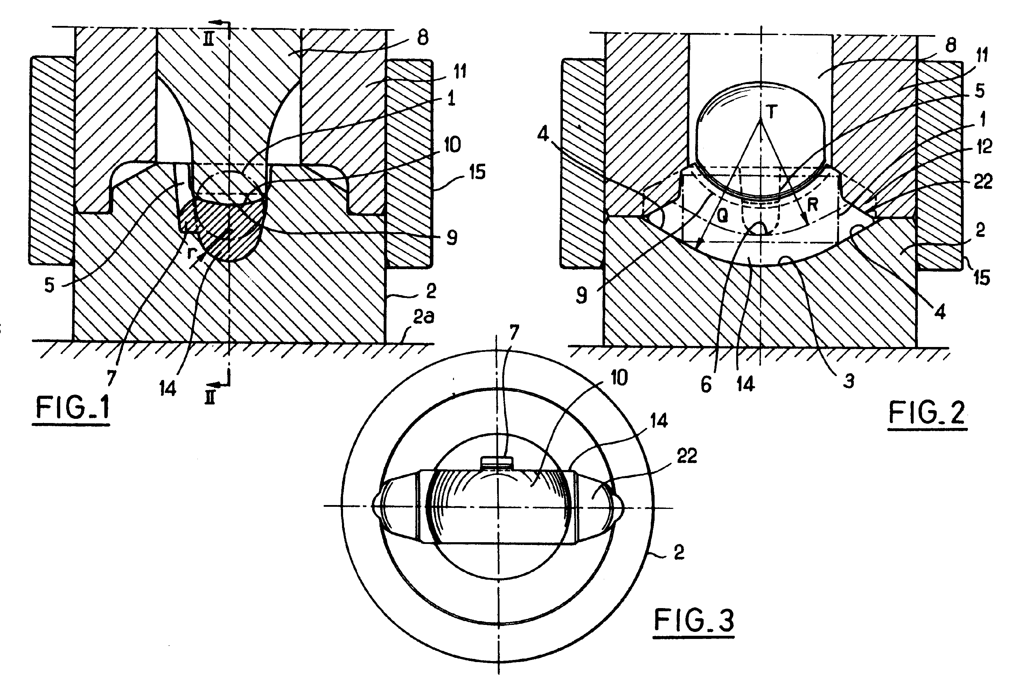

Comme représenté aux Figures 1 et 2, l'ébauche 14 du segment de galet est conformée à froid et à partir d'une billette cylindrique d'acier recuit 1 représentée en trait mixte. Cette billette est introduite dans une matrice 2 fixée à la table 2a d'une presse. Cette matrice porte une surface active interne comprenant un segment de tore central 3 (figure 2) raccordé à ses extrémités à deux surfaces cylindriques 4 complémentaires des chemins de roulement et glissement que comportera la surface intérieure du bol du joint homocinétique pour lequel le segment 14 est prévu.

Le segment 14 va donc présenter une surface extérieure comprenant une région torique centrale prolongée à chaque extrémité par une région cylindrique.

Conformément à la demande de brevet FR-A-2 622 653 publiée le 5 mai 1989, les deux surfaces cylindriques extérieures du segment de galet permettent au segment de glisser sous pression relativement faible sur le chemin de roulement et glissement associé lorsque le tourillon du tripode associé à ce segment se trouve au voisinage de l'une ou l'autre de ses positions axiales extrêmes par rapport au bol du joint. Ceci permet au joint d'avoir une grande course de coulissement sans que le segment de galet doive avoir une course circonférentielle correspondante autour de son tourillon de tripode. Au contraire, lorsque le tourillon de tripode se trouve sensiblement à mi-course axiale à l'intérieur du bol, le segment de galet fonctionne par roulement de sa surface torique dans le chemin de glissement et roulement, ce qui se traduit par le minimum de frottement pour cette situation qui correspond à une très grosse proportion du temps de fonctionnement du joint.

La matrice comporte une entaille latérale 5 dont le fond 6 cylindrique est complémentaire d'un bouton de retenue 7 à former latéralement sur le segment 14. Conformément à la demande de brevet français 87 14 917, ce bouton coopère en service avec des butées qui, lorsque le tripode approche de l'une de ses positions axiales extrêmes dans le bol, obligent en cas de besoin le segment à pivoter autour de son tourillon jusqu'à ce que la région cylindrique correspondante de la surface extérieure du segment soit en contact avec le chemin de roulement. Il est ainsi automatiquement remédié à tout décalage angulaire du segment par glissement ou roulementglissement accidentel de la région torique de la surface extérieure du segment.

Le poinçon 8 mu par le piston de presse, non représenté, porte une extrémité de travail sphérique 9 sensiblement complémentaire de la portée sphérique concave 10 à réaliser sur le segment. Le poinçon 8 est guidé à l'intérieur d'un fourreau 11 portant deux angles 12 (figure 2) de formage des extrémités 22 du segment 14.

Le fourreau, et par conséquent le poinçon, sont centrés relativement à la matrice 2 par une frette 15 enserrant le fourreau 11 et coulissant autour de la matrice 2.

La surface torique extérieure dont la section circulaire transversale a un rayon r (figure 1) et dont la ligne des centres a un rayon R (figure 2), et les extrémités cylindriques de rayon transversal r ainsi formés, présentent une géométrie et un état de surface très satisfaisants qui dispensent de toute finition. Par contre, la surface sphérique concave doit être reprise en rectification après le traitement thermochimique de durcissement du segment.

La surface torique extérieure sert, selon l'invention, de référence de positionnement pendant cette opération de rectification.

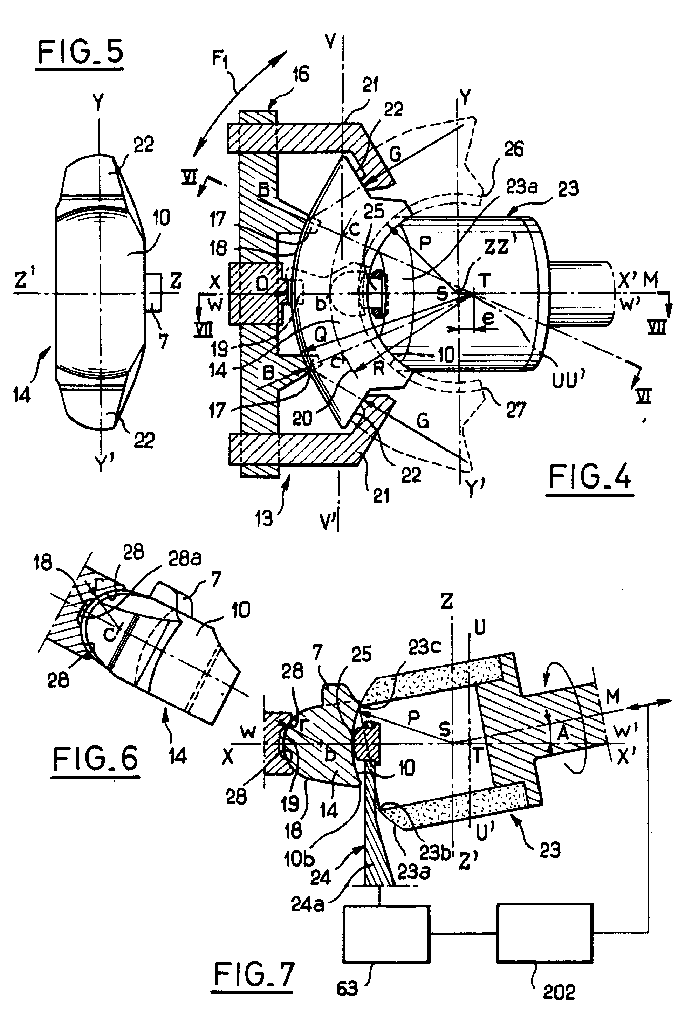

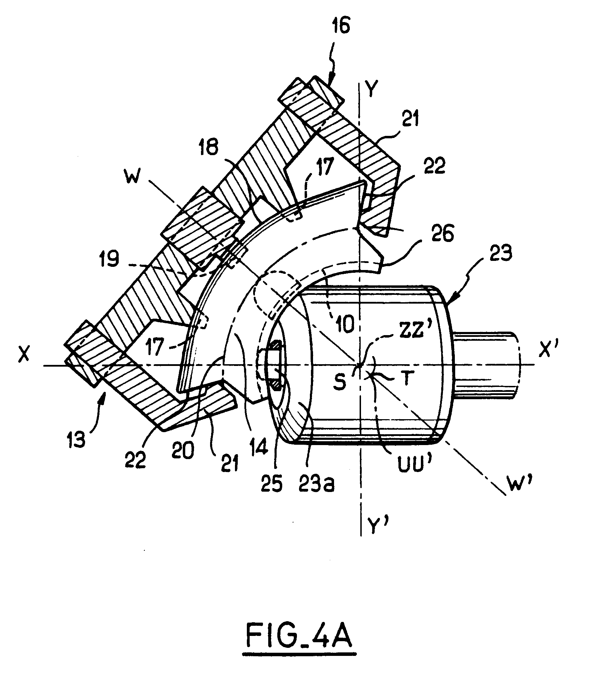

Les figures 4, 4a et 5 à 7 représentent schématiquement le principe du maintien du segment en position précise relativement au corps 16 - ou plateau porte-pièce - d'une monture 13 destinée à être elle-même guidée avec précision lors de l'opération de rectification de la portée sphérique concave 10.

Le plateau 16 comporte deux portées fixes ou bers 17, qui sont donc fixes l'un par rapport à l'autre, et qui ont un profil circulaire de rayon r, complémentaire de la section transversale du tore de roulement 18 du segment 14 (figure 6). Les bers 17 sont espacés circonférentiellement l'un de l'autre autour de l'axe UU' de la surface torique 18.

L'appui du segment 14 contre les bers 17, est intrinsèquement instable à l'égard des rotations autour d'un axe géométrique VV' passant sensiblement par les centres C des profils des deux bers de positionnement 17. C'est pourquoi la monture comprend un troisième ber 19 qui est situé à mi-distance circonférentielle entre les deux bers de positionnement 17, qui est mobile selon l'axe médian WW' voulu pour le segment 14, et qui s'appuie en service au milieu de la longueur circonférentielle de la surface extérieure du segment.

On appelle plan circonférentiel du segment le plan coupant perpendiculairement l'axe UU' de la surface extérieure torique 18 au centre T de cette dernière.

On appelle "axe médian WW′ du segment" l'axe qui est porté par le plan circonférentiel du segment, coupe l'axe UU′ et traverse le segment à mi-longueur circonférentielle de celui-ci. Dans la position représentée à la figure 4, l'axe médian coïncide avec un axe fixe XX′ lié au bâti (non représenté) de la rectifieuse.

Lorsque le segment 14 est appuyé contre les deux bers 17 et contre le troisième ber 19, l'axe UU′ de la surface torique 18 et son centre T sont positionnés avec précision par rapport au plateau 16.

On souhaite que la portée sphérique 10 à réaliser sur le segment 14 ait un centre S qui soit situé sur l'axe médian, coïncidant avec l'axe XX′ sur les figures, et entre le segment et le centre T de la surface torique 18.

En vue de cet usinage, le plateau 16 est supporté par le bâti de rectifieuse (non représenté) avec possibilité de rotation autour d'un axe ZZ′ coupant perpendiculairement au centre S voulu pour la portée sphérique 10 le plan circonférentiel du segment tel que défini par les bers 17, 19. L'excentration e a été fortement exagérée à la figure 4, dans un but de clarté. Elle est en pratique de l'ordre de 1 à plusieurs dixièmes de millimètre. Cette excentration conditionne la caractéristique de rappel en position neutre du segment pendant l'utilisation du joint. En effet, avec ladite excentration, la région médiane du segment est radialement plus mince que le reste du segment et, sous charge, le segment tend à se positionner autour du tourillon de façon que sa région la plus mince soit interposée entre le tourillon et le chemin de roulement. Il importe que l'excentration e entre les centres S et T ait l'orientation voulue.

Pour cela, le plan de symétrie transversal du segment, passant par l'axe UU′ de la surface torique 18, et par l'axe médian WW′ du segment, doit contenir le centre shérique S voulu pour la portée sphérique 10 afin que le très court segment ST représentant l'excentration "e" soit orienté parallèlement au plan de symétrie transverssal du segment. Si le centre S était écarté, ne serait-ce que de quelques dixièmes de mm, du plan de symétrie transversal du segment, le segment ST formerait un angle très important, par exemple 15°, avec le plan de symétrie transversale du segment, car la longueur "e" du segment ST, fortement exagérée aux figures dans un but de clarté, est elle-même de l'ordre de 1 à plusieurs dixièmes de mm. Un segment de galet qui comporterait une telle erreur sur l'orientation de ST serait constamment, en service, rappelé dans une position très mauvaise autour de son tourillon.

La condition de passage du plan (UU′, WW′) de symétrie transversale du segment 14 par le centre voulu S situé sur l'axe ZZ′ est assurée principalement par les bers de positionnement 17. Si un bers 17 était décalé de un dixième de mm par rapport à l'axe ZZ′, il s'ensuivrait un gros défaut d'orientation de ST pendant la rectification des segments. On note à ce sujet que l'invention, en positionnant le segment 14 par appui de sa surface torique 18 contre les bers 17, élimine les risques d'erreur ayant pour origines une position imprécise du centre T. Le risque d'imprécision sur la position du centre T est probable, compte tenu du procédé d'obtention de la surface 18, par formage à froid.

La condition de passage du plan (UU′, WW′) par le centre S est également assurée par deux griffes mobiles 21 commandées automatiquement, qui calent circonférentiellement le segment 14 autour de l'axe UU′ de la surface torique 18. Toutefois, ce calage peut être moins précis que le positionnement assuré par les bers 17 puisqu'une erreur sur la position d'une griffe 21 se traduirait par une erreur d'un ordre de grandeur beaucoup plus faible sur la position relative des centres S et T.

Les deux griffes mobiles 21 viennent prendre appui sur les extrémités 22 du segment en y exerçant deux forces G, chacune dirigée, selon une orientation sensiblement tangentielle, vers le centre du ber fixe 17 le plus proche, et assurent ainsi le maintien du segment bloqué contre les trois bers.

Chacun des trois bers 17 et 19 comporte deux surfaces d'appui 28 séparées par un dégagement 28a s'étendant parallèlement à l'axe UU′ de la surface torique 18 afin d'assurer un positionnement précis des sections de rayon r.

La résultante des forces G d'appui des griffes 21 sur les extrémités du segment, laquelle est parallèle à l'axe médian du segment, doit être supérieure à la force d'appui D du ber mobile 19 afin que les forces B des bers fixes 17 conservent une capacité de guidage efficace. Cependant, les forces G et D peuvent être grandes devant les forces B, pour usiner la portée sphérique 10 alors que le segment est déformé sensiblement comme il le sera en service sous charge nominale, comme il a été dit plus haut.

L'excentration e a été fortement exagérée à la figure 4, dans un but de clarté. Elle est en pratique de l'ordre de 1 à plusieurs dixièmes de millimètre. Cette excentration conditionne la caractéristique de rappel en position neutre du segment pendant l'utilisation du joint. En effet, avec ladite excentration, la région médiane du segment est radialement plus mince que le reste du segment et, sous charge, le segment tend à se positionner autour du tourillon de façon que sa région la plus mince soit interposée entre le tourillon et le chemin de roulement.

La rectification est effectuée au moyen d'une meule boisseau 23 dont l'axe de rotation MS passe rigoureusement par le centre voulu S pour la portée sphérique, et coupe par conséquent en S l'axe ZZ′ de pivotement de la monture 13. La meule 23 présente à son extrémité une surface active annulaire 23a qui est une zone sphérique de rayon P égal au rayon voulu pour la portée sphérique 10, et centrée sur l'axe MS de la meule.

L'avance de la meule pour le travail de rectification de la portée sphérique concave 10, pour la compensation de l'usure de la meule ainsi que pour le mouvement de retrait pour permettre la mise en place des segments à usiner et l'enlèvement des segments usinés, s'effectue selon l'axe MS.

Pendant l'usinage, on fait avancer la meule le long de son axe en même temps qu'on la fait tourner autour de son axe. A tout moment, il n'y a qu'une partie de la portée sphérique 10 qui est en contact avec la surface active 23a de la meule. L'usinage de l'ensemble de la portée 10 résulte d'un mouvement relatif de balayage rotatif entre la meule d'une part et le segment 14 et sa monture 13 d'autre part. Ce mouvement de balayage rotatif est assuré par pivotement en va-et-vient de la monture et du segment qu'elle porte autour de l'axe ZZ', comme le schématise la flèche F1 à la figure 4. Ce mouvement est permis par le montage pivotant qui est prévu selon l'axe ZZ' entre le plateau 16 et le bâti non représenté de la rectifieuse. On a représenté à la figure 4 le segment 14 à mi-course de balayage (axes XX' et WW' confondus) et, en pointillés, dans ses deux positions extrêmes 26 et 27. La figure 4a montre la situation lorsque le segment est dans la position 26 de la figure 4. L'axe médian WW' du segment est alors écarté de l'axe XX'.

Le dispositif de rectification comporte en outre un palpeur 24 comprenant une touche 25 en matériau très dur tel que le carbure de tungstène. La touche 25 est en contact avec la portée 10 en cours d'usinage, dans une région de celle-ci qui est en regard de l'alésage 23d de la meule 23 et qui par conséquent n'est pas en contact avec la surface active 23a de la meule 23. Le palpeur 24 est supporté par le bâti de la machine, et sa touche 25 s'appuie sur la portée 10 selon l'axe XX' de façon à être toujours en contact avec la portée 10 quelle que soit la position du segment 14 dans son mouvement de va-et-vient autour de l'axe ZZ'.

Le palpeur 24 comporte un bras 24a qui s'étend entre une région 10b de l'un des bords latéraux de la portée 10, et une région 23b du bord annulaire intérieur de la surface active 23a. Les régions 10b et 23b sont écartées l'une de l'autre. Grâce à un angle A (figure 7) entre l'axe XX' et l'axe MS de la meule, le passage du bras est facilité tandis qu'une région 23c, diamètralement opposée à la région 23b, du bord annulaire intérieur de la surface 23a est en contact avec la portée 10.

L'angle A entre l'axe de rotation MS de la meule et l'axe XX' peut varier depuis zéro jusqu'à une trentaine de degrés. Il est conditionné non seulement par la présence du bras 24a mais également par la nécessité que la surface active 23a de la meule balaye de manière aussi égale que possible la portée 10 à rectifier.

Le palpeur 24 est relié à un comparateur micrométrique 63, qui n'est représenté que de manière schématique, qui commande grâce à un dispositif d'asservissement 202, qui n'est lui aussi que schématisé, les mouvements de la meule le long de son axe, à savoir :
- mouvement d'approche de la meule ;
- mouvement d'avance de travail ; et
- arrêt du mouvement d'avance de travail et mouvement de retrait de la meule et du palpeur 24 lorsque la cote précise désirée est atteinte.

Plus précisément, le palpeur 24 détecte en permanence la position du point d'intersection entre l'axe XX' et la portée sphérique 10 en cours d'usinage, et déclenche l'arrêt de l'avance de travail lorsque ce point est à une distance P, égale au rayon souhaité pour la portée sphérique 10, du centre S voulu pour la portée sphérique 10. Cette situation est atteinte lorsque le centre de la surface active 23a de la meule se trouve lui-même au point S, comme représenté à la figure 7.

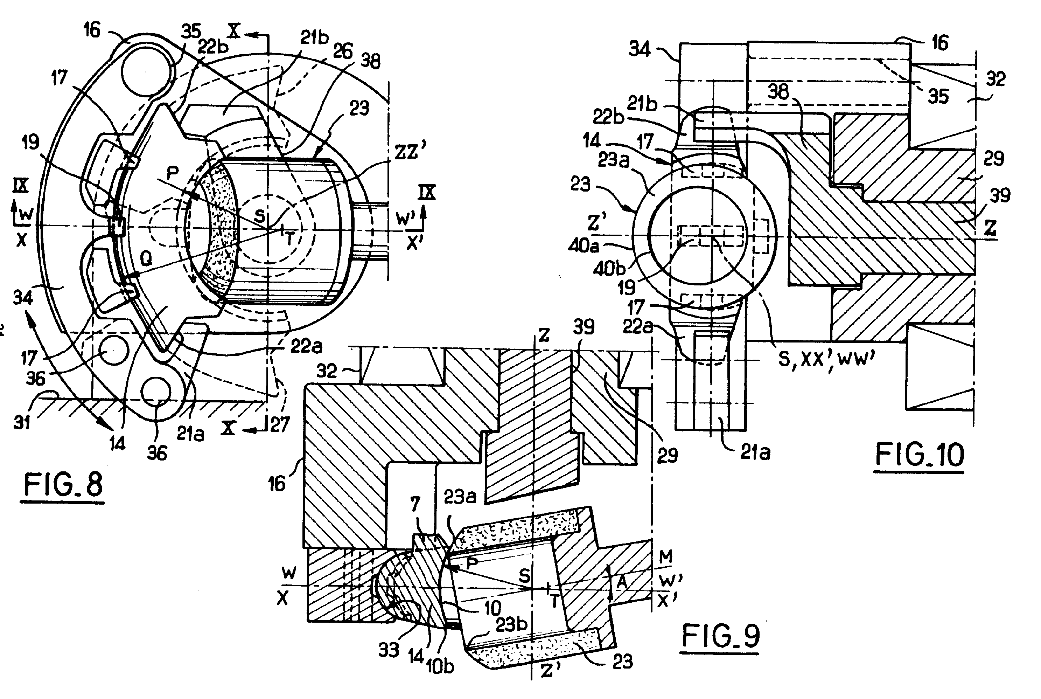

Dans la description du premier exemple pratique, représenté aux figures 8 à 10, de réalisation d'un dispositif en vue de la mise en oeuvre du procédé décrit en référence aux figures 4 à 7, on désignera par les mêmes références qu'aux figures 4 à 7 les éléments fonctionnellement identiques ou similaires, et on ne décrira que les différences par rapport aux figures 4 à 7.

Le plateau oscillant 16, qui porte les bers fixes 17, est articulé à un bâti 31 de la rectifieuse au moyen d'un arbre creux 29 supporté par un palier 32 d'axe ZZ' pour permettre le mouvement de balayage rotatif autour dudit axe. Le ber mobile 19 est usiné dans un levier 34 dont l'une des extrémités est articulée au plateau 16 autour d'un axe 35 qui est parallèle à l'axe ZZ', et voisin de l'une des extrémités 22b du segment 14 en service.

L'autre extrémité du levier porte rigidemment, au moyen de deux vis 36, une première griffe démontable 21a de blocage du segment contre les bers. Cette griffe 21a est dite fixe car compte tenu de la position de l'axe 35, elle donne à l'extrémité circonférentielle correspondante 22a du segment 14 un appui circonférentiel rigide. La deuxième griffe 21b, portée par un levier 38, est commandée par un arbre 39 d'axe ZZ', solidaire du levier 38, et monté pivotant dans l'arbre creux 29. L'arbre 39 est relié à des moyens pour appliquer à la griffe 21b un moment dans le sens de la compression circonférentielle du segment contre la griffe 21a, ce qui en même temps appuie la surface extérieure du segment contre le ber "mobile" 19, compte tenu de l'orientation des extrémités 22a, 22b par rapport aux efforts qu'elles subissent de la part des griffes 21a, 21b. La force d'appui G exercée par la griffe commandée 21b suffit donc à établir sur les bers fixes 17 et mobile 19 les forces d'appui requises B,D, qui sont proportionnelles à G,la griffe fixe 21a recevant une force sensiblement égale, en grandeur, à celle appliquée par la griffe commandée 21b.La valeur de la force G, réglable à volonté par dosage du moment appliqué à l'arbre 39, conditionne donc l'ensemble des forces appliquées au segment, forces dont l'importance relative est déterminée une fois pour toutes par la position de l'axe d'articulation 35.

L'usinage et le positionnement très précis des surfaces de portée 28 des trois bers 17 et 19 peut s'effectuer très simplement, après démontage de la griffe fixe 21a et immobilisation du levier 34 relativement au plateau 16, par le travail d'une meule d'intérieur dont le profil correspond à celui voulu pour les bers 17 et 19, tandis que le plateau 16 est mis en rotation autour de l'axe ZZ'. Certes, l'axe ZZ' est légèrement excentré par rapport à l'axe UU' de la surface 18, mais cette excentration de l'ordre de 1/10ème de mm est sans incidence puisque le ber 19 sera, en service, mobile par rapport aux bers 17 dans la direction de l'excentration.

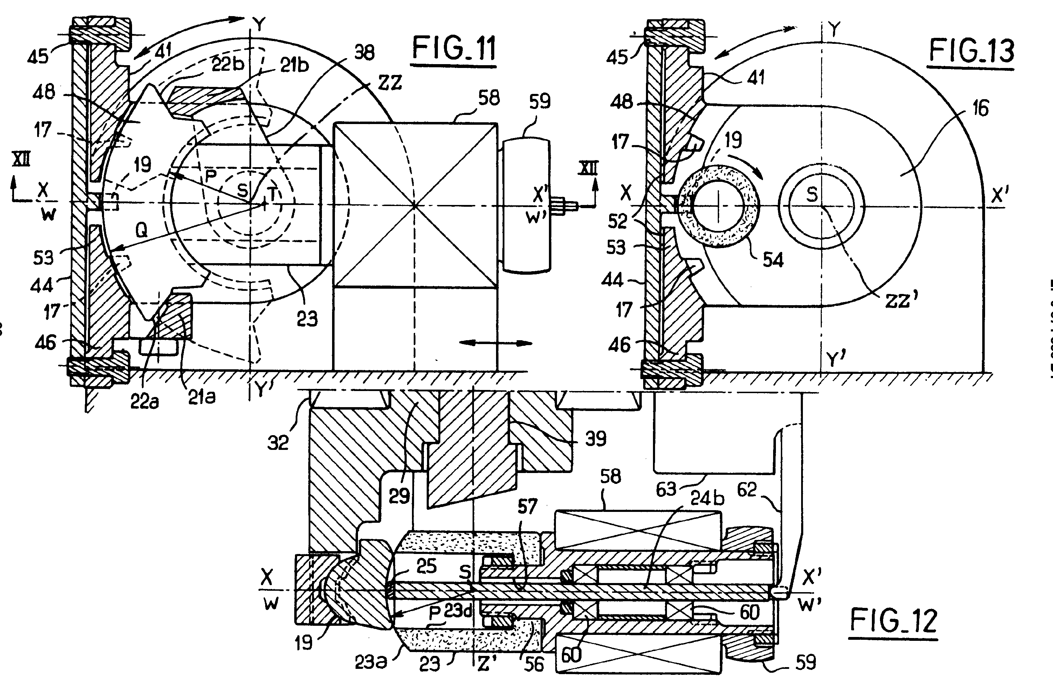

Le dispositif non représenté de commande des mouvements de la meule 23 le long de son axe MS peut être piloté par le signal délivré par un palpeur non représenté disposé comme représenté aux figures 7 ou 12 (la disposition selon la figure 12 sera décrite plus loin). La surface sphérique active 23a de la meule 23, telle que projectée sur le plan de la figue 10, est incluse entre les deux circonférences 40a et 40b.

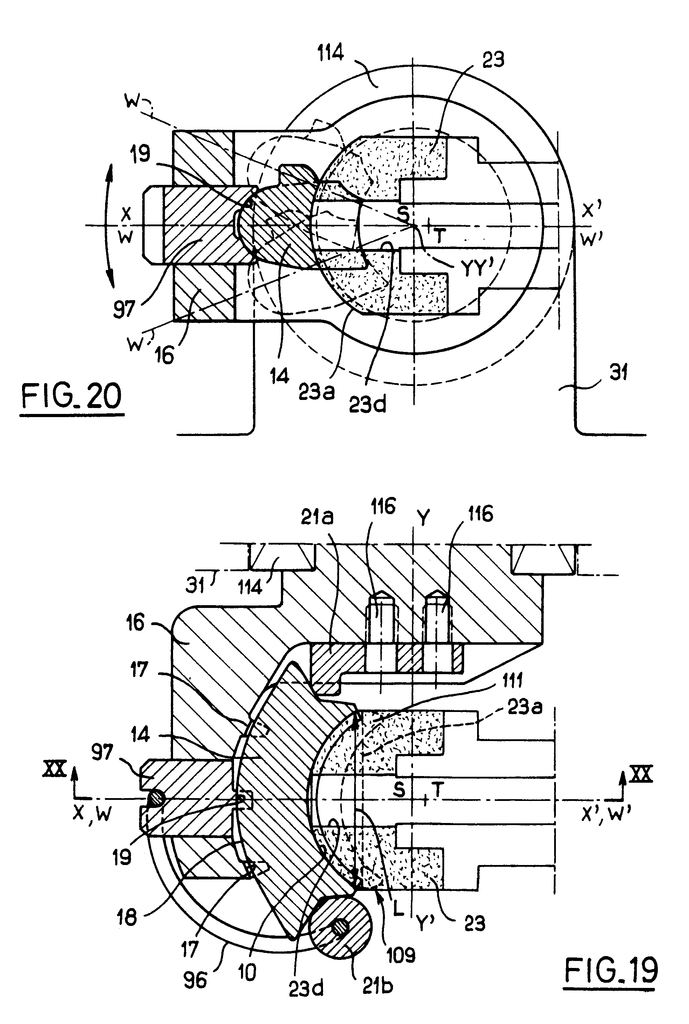

Dans le montage de la figure 9, l'axe UU' de la surface torique 18 du segment 14 est parallèle à l'axe ZZ' du mouvement de balayage mais peut être incliné par rapport à cet axe autour de l'axe WW', d'un angle pouvant aller jusqu'à 90°. Si cet angle est de 90°, on se trouve dans le cas du montage de la figure 20, qui sera décrit plus loin. La position du centre S situé sur l'axe ZZ' et celle du centre T du tore, ne sont pas modifiées. Seul le dispositif portant les trois bers et les deux griffes est incliné du même angle que l'axe du tore.

Le mode de réalisation des figures 11 à 13 ne sera décrit qu'en ce qui concerne ses différences par rapport au précédent, avec utilisation autant que possible des mêmes références aux figures.

Une lame élastique 44 est fixée à chacune de ses extrémités par des vis 45 à des pattes 46 usinées sur le plateau 16. La lame 44 porte à mi-distance entre ses extrémités précitées le ber mobile 19.

La griffe fixe 21a, fixée de manière rigide mais amovible au plateau 16, retient circonférentiellement l'extrémité 22a du segment 14, lui-même bloqué à son autre extrémité 22b par la griffe mobile 21b portée par le levier 38 commandé par l'arbre interne 39 coaxial à l'axe d'oscillation ZZ' du plateau 16.

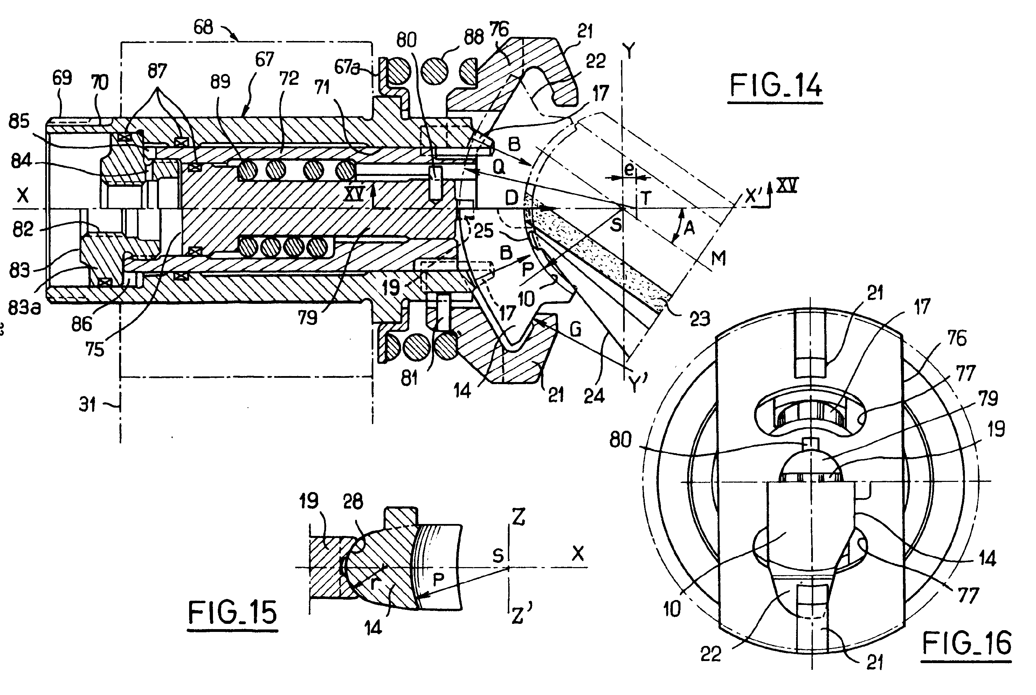

L'usinage avec positionnement très précis des bers 17, 19 s'effectue en rectification au moyen d'une meule d'intérieur 54 présentant le profil précis requis (figure 13). On met en rotation le plateau 16 autour de son axe ZZ' après démontage de la butée fixe 21a. De plus, pendant l'opération, la lame flexible 44 est fléchie d'une valeur appropriée grâce à des cales 52 interposées entre la lame et des saillies 53 supportant les bers fixes.La valeur de l'effort de flexion ainsi exercée conditionnera la force d'appui du ber mobile 19 lors des opérations de rectification des segments dont la position est toujours définie relativement à l'axe ZZ' par les bers fixes 17.

Comme le montre la figure 12, dans cet exemple, le contrôle continu de la rectification s'effectue grâce à une tige ou palpeur interne 24b concentrique à l'axe de rotation de la meule 23, qui est ici l'axe XX' (autrement dit l'angle A est égal à zéro). La tige 24b s'étend dans un alésage 57 de l'arbre porte-meule 56. Cet arbre qui tourne à l'intérieur d'un palier spécial 58 de haute précision de technique connue, est entraîné par un moyen d'entraînement périphérique tel qu'une poulie 59.

La tige palpeur 24b est centrée à l'intérieur de l'arbre porte-meule 56 par des roulements 60 à l'intérieur desquels elle peut coulisser très librement selon l'axe XX'. La tige palpeur 24b qui porte la touche 25 commande le levier 62 du comparateur micrométrique figuré schématiquement en 63, qui délivre le signal d'asservissement de position de la meule dans la direction de son axe XX'.

Le principe de fonctionnement serait similaire si l'inclinaison A entre l'axe de la meule et l'axe XX' était non nul, par exemple tel que représenté à la figure 9.

Ainsi sont déclenchées les différentes phases de l'opération : approche, rectification, arrêt de l'avance de la meule et retrait de celle-ci, ainsi que l'éjection des segments usinés puis le chargement des segments à usiner.

L'exemple de figures 14 à 16 ne sera décrit qu'en ce qui concerne ses différences par rapport à l'exemple précédent. Les numéros et les lettres de référence des exemples précédents seront autant que possible repris pour les éléments fonctionnellement identiques ou similaires.

L'exemple des figures 14 à 16 vise un deuxième mode de rectification, en ce sens que le mouvement rotatif du segment 14, par lequel il y a mouvement relatif de balayage de la portée sphérique 10 par la meule 23, est ici une rotation continue autour de l'axe XX'.

Les deux bers fixes 17 sont usinés au bout d'un arbre de broche 67, qui remplace en quelque sorte le plateau 16 des exemples précédents et qui est monté en rotation relativement au bâti 31 de la rectifieuse dans un palier 68 d'axe XX'. L'arbre de broche 67 est entraîné en rotation par une poulie non représentée, calée grâce à un filetage 69 et à un clavetage 70 à l'extrémité de cet arbre qui est opposée au segment 14 à usiner.

L'arbre 67 présente un alésage axial 71 qui reçoit un fourreau 72 portant en extrémité dirigée vers le segment 14 une platine 76 (figure 16) portant à son tour les deux griffes 21 développées radialement pour venir en appui sur les extrémités 22 du segment 14 à usiner. La platine 76 est ajourée en 77 (figure 16) pour laisser passage aux deux bers fixes 17 et permettre le déplacement axial relatif des griffes 21 par rapport à ceux-ci. Le ber central mobile 19 est porté par l'extrémité d'un piston 79 coulissant à l'intérieur du fourreau 72. Une clavette 80 assure le calage angulaire relatif du fourreau porte-griffes 72 et du piston 79, et une clavette 81 assure le calage angulaire relatif du fourreau 72 et de l'arbre 67. Le fourreau 72, le piston 79 et l'arbre 67 sont donc solidaires en rotation autour de l'axe XX'.

Les griffes 21 ainsi que le ber central mobile 19 sont actionnés hydrauliquement ou pneumatiquement. L'alimentation sous pression s'effectue par un raccord tournant fixé sur une entrée filetée 82 usinée dans un bouchon 83 vissé dans l'extrémité du fourreau 72 opposée au segment 14.

Une collerette 83a du bouchon 83 est appuyée (par vissage du bouchon 83 dans le fourreau 72) contre l'extrémité du fourreau et coulisse de manière étanche dans une région d'extrémité élargie de l'alésage 71 de l'arbre creux 67.

Un trou 84 ménagé à travers le bouchon 83, et une entaille 85 dans le bord du fourreau qui est appuyé contre la collerette 83a, permettent à la pression d'agir non seulement sur le fond du piston 75, mais également sur la section annulaire 86 comprise entre le diamètre extérieur de la collerette 83a et le diamètre extérieur, plus faible, du fourreau 72.

Trois garnitures 87 assurent l'étanchéité sous pression, avec possibilité de déplacement axial relatif, entre le piston 79 et le fourreau 72, entre le fourreau 72 et l'alésage de l'arbre creux 67, et entre la collerette 83a et la région d'extrémité élargie de l'alésage 71. L'application de la pression à l'entrée 82 du bouchon 83 se traduit ainsi par une force appliquée au piston 79, et par conséquent au ber mobile 19, dirigée vers le centre S, et par une force s'exerçant en sens opposé sur le fourreau 72, et par conséquent sur les griffes 21.

L'importance de la pression appliquée conditionne évidemment l'intensité des forces de maintien G, B, D. L'ensemble maintient le segment dans une position dans laquelle son axe médian est l'axe XX'.

Un ressort de compression 88 monté autour de l'arbre 67 et s'appuyant axialement sur l'arbre 67 (par l'intermédiaire d'une bague 67a) et sur la face arrière de la platine 76, rappelle les griffes 21 et le fourreau 72 axialement vers le centre S.

Un ressort de compression 89 monté dans le fourreau 72 autour du piston 79 rappelle le piston 79, et par conséquent le ber mobile 19, dans la direction axiale XX', dans le sens éloignant le ber 19 du centre S.

Comme représenté en haut de la figure 14, en l'absence de pression, les ressorts 88 et 89 sont relativement détendus et mettent les griffes 21 et le ber mobile 19 dans une position de libération du segment 14 (représenté en trait mixte).

Par contre, comme représenté en bas de la figure 14, la pression appliquée à l'entrée 82 génère des forces capables d'amener les griffes 21 et le ber 19 dans une position de serrage du segment à l'encontre de l'effet des ressorts 88 et 89.

L'avance de travail s'effectue comme dans les exemples précédents par avance de la meule 23 le long de son axe de rotation MS jusqu'à ce que le palpeur 24 détecte que le point de la portée sphérique 10 avec lequel il est en contact a une position correspondant à la coïncidence entre le centre réel de la portée sphérique 10 et le centre S voulu par celle-ci. Contrairement aux exemples précédents, la touche 25 est placée près du pourtour de la meule 23 et extérieurement à celle-ci. Le point de la portée 10 avec lequel la touche 25 est en contact est suffisamment proche de l'axe XX' pour que ce contact soit permanent au cours de la rotation du segment 14 autour de l'axe XX'.

Le palpeur 24 fournit le signal de position au dispositif d'asservissement commandant les mouvements de la meule selon la direction MS et déclenche l'électrovanne hydraulique ou pneumatique ainsi que le système non représenté d'alimentation et d'éjection des segments.

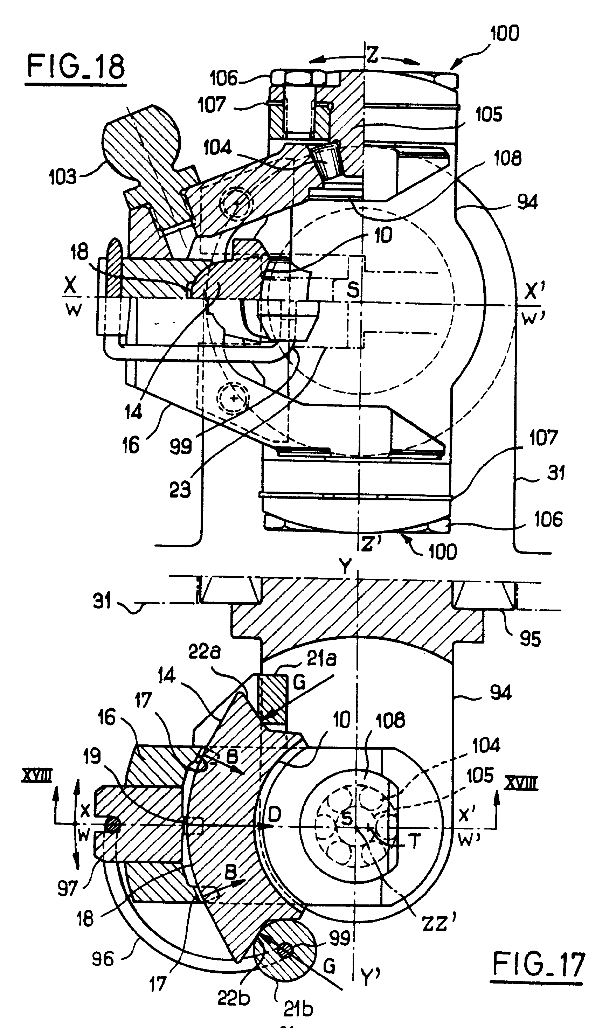

L'exemple des figures 17 à 18 ne sera décrit qu'en ce qui concerne ses différences par rapport à l'exemple précédent. Les numéros et les lettres de référence des exemples précédents seront autant que possible repris pour les éléments fonctionnellement identiques ou similaires.

L'exemple des figures 17 et 18 vise un troisième mode de rectification en ce sens que le mouvement relatif de balayage de la portée sphérique 10 par la meule 23 est ici un mouvement d'oscillation sphérique autour du centre S par combinaison de deux mouvements de rotation oscillants autour de deux axes perpendiculaires ZZ' et YY' se coupant au centre S voulu pour la portée sphérique 10. L'axe YY' est perpendiculaire à l'axe XX'.

Le segment 14 est positionné sur les bers fixes 17 qui sont usinés à l'intérieur d'un berceau 16 articulé à la cardan par rapport au bâti 31 de la machine.

Plus précisément, le berceau 16 est articulé autour de l'axe ZZ' à une chape de cardan 94 qui oscille elle-même autour de l'axe YY' dans un palier 95 solidaire du bâti 31.

Le palier 95 est un palier de grande précision de type connu. Il définit donc avec une grande précision la position de l'axe YY' par rapport au bâti 31.

Le mouvement oscillant autour de l'axe ZZ' s'effectue au moyen de deux articulations coaxiales 100 à rouleaux coniques 104 dont le cône central 105 est fixé à la chape 94 par des vis 106 avec possibilité de réglage le long de l'axe ZZ' par interposition de cales calibrées 107. Ainsi, on peut résorber les jeux dans les articulations 100 et en même temps positionner le berceau 16 avec précision le long de l'axe ZZ' de manière que le plan ciconférentiel du segment, tel que défini par les bers 17, passe par le point S d'intersection des axes YY' et ZZ'. L'étanchéité des articulations 100 est assurée par une plaque de fermeture 108 fixée au berceau 16 face à l'extrémité du cône 105 et par des garnitures d'étanchéité non représentées.

Il est à noter que dans ce mode de rectification, et contrairement aux précédents, l'axe ZZ' n'est pas fixe par rapport au bâti puisqu'il est solidaire de la chape 94 qui pivote autour de l'axe YY' par rapport au bâti.

Le berceau 16 porte une rotule 103 de commande du mouvement oscillant autour de l'axe ZZ'. La rotule 103 est destinée à être articulée à une biellette actionnée en va-et-vient au moyen d'une manivelle. Le mouvement autour de l'axe YY' peut, de manière non représentée, être commandé par action sur la chape 94 du côté du palier 95 qui est opposé au berceau 16.

Le blocage du segment 14 contre les bers fixes 17 s'effectue au moyen d'un étrier élastique 96 articulé sur un plongeur 97 qui est monté coulissant dans le berceau 16 selon l'axe médian WW' du segment. Le plongeur 97 porte le ber mobile central 19. L'étrier 96 a deux extrémités recourbées 99 qui sont engagées de manière articulée dans l'alésage central d'un galet constituant la griffe 21b et venant par conséquent presser l'extrémité 22b du segment 14. L'étrier élastique 96 assure donc à la fois la force pressante sur l'extrémité 22b et la force d'appui du ber central 19 sur le segment 14. L'autre extrémité 22a du segment vient en appui sur la griffe 21a qui est fixée de manière démontable au berceau 16.

Le chargement du segment 14 et son blocage sur les bers 17, 19 par l'étrier 96 s'opèrent lorsque le dispositif est immobile. Les valeurs relatives des forces de maintien B, D, G sont déterminées par la position des points d'articulation de l'étrier 96 sur le plongeur 97 et sur le galet 21b, et leur intensité est déterminée par la raideur à l'extension de l'étrier 96.

Les amplitudes des deux rotations, autour de l'axe YY' et respectivement autour de l'axe ZZ', peuvent être avantageusement différentes et réglées pour balayer au mieux l'aire de la portée sphérique concave 10. Les fréquences de ces oscillations sont définies en fonction de l'opération à réaliser.

Cette opération peut être une opération de rectification, comme dans les exemples décrits jusqu'à présent, ou encore une opération de superfinition par pierrage, opération qui succède à l'opération de rectification. En effet, le présent mode d'usinage avec mouvement de balayage autour de deux axes perpendiculaires, se prête particulièrement bien à la superfinition par pierrage.

La superfinition par pierrage est une opération ayant pour but de réduire la rugosité de la surface par écrêtage des micorprofils résultant de la rectification préalable, mais sans modifier la géométrie, ce qui rend inutile le contrôle dimensionnel continu pour cette opération.

Pour l'opération de superfinition par pierrage, l'outil abrasif est approché de la portée sphérique 10 rectifiée selon un axe passant par le centre S. Il peut s'agir de l'axe XX' qui est l'axe perpendiculaire à l'axe YY' et à la position moyenne de l'axe ZZ'. Il peut également s'agir d'un axe tel que l'axe MS des exemples précédents, formant un angle A avec l'axe XX'. Par ce mouvement d'approche, on applique souplement l'abrasif, qui présente une surface de travail sphérique convexe complémentaire de celle du segment 14, contre la surface sphérique concave pendant que le segment oscille autour des axes ZZ' et YY' a une fréquence plus élevée que pour l'opération de rectification.

Si au contraire on désire procéder à une opération de rectification, on peut, comme représenté à la figure 18 disposer la meule selon l'axe XX', la faire avancer le long de cet axe, et la faire tourner autour de cet axe, le contrôle continu de la cote d'usinage pouvant être effectué au moyen d'une tige coulissante actionnant un comparateur comme représenté à la figure 12.

Le profil des bers fixes 17 est rectifié par oscillation du berceau 16 autour de son axe ZZ'.

L'exemple des figures 19 et 20 vise une variante simplifiée du troisième mode d'usinage, en ce sens que le mouvement rotatif du segment 14, par lequel il y a mouvement relatif de balayage de la portée sphérique 10 par la meule 23 est ici une rotation en va-et-vient autour de l'axe YY'. Cet exemple ne sera décrit qu'en ce qui concerne ses différences par rapport au précédent, avec autant que possible les mêmes numéros et lettres de références.

Le corps 16, qui porte les bers fixes 17, est articulé au bâti 31 par l'intermédiaire d'un palier 114 d'axe YY'. Le montage du bers mobile 19 et de la griffe mobile 21b est identique à celui des figures 17 et 18. La griffe fixe 21a est fixée au corps 16 au moyen de deux vis 116.

Comme le montre la figure 19, la meule 23 doit présenter un diamètre extérieur 109 superieur à l'ouverture L du segment, ceci afin que l'ensemble de l'aire de la portée sphérique 10 soit balayé par le mouvement autour de l'axe YY'.

Cependant, dans les positions d'oscillation maximum, la portée du segment 10 doit déborder la couronne sphérique coupante 23a de la meule 23, comme représenté en 111 à la figure 19.

Enfin, le diamètre de l'alésage 23d de la meule doit être suffisamment petit pour que, au voisinage de la demi-longueur circonférentielle de la portée 10, il y ait un large recouvrement entre les zones usinées dans chaque position extrême d'oscillation.

Le contrôle micrométrique continu peut être assuré par un palpeur dont une tige de transmission passe à l'intérieur de la meule 23 comme cela est représenté figure 12. L'axe de la meule est l'axe XX' qui se trouve dans le plan circonférentiel du segment lorsque celui-ci est à mi-course d'oscillation autour de l'axe YY'.

Les procédés et dispositifs proposés selon la présente demande permettent de réaliser économiquement en grande série la rectification de portées sphériques concaves précises avec positionnement rigoureux du centre sphérique S relativement au centre T de la surface cylindrotorique extérieure formée à froid préalablement et traitée thermiquement. L'excentration e requise entre les deux centres T et S n'est en pratique que de quelques dixièmes de millimètre, de sorte que la moindre erreur de positionnement du centre sphérique relativement au tore irait à l'encontre du but recherché qui est le rappel en position médiane du segment pendant le fonctionnement du joint. Or, grâce au système des deux bers fixes et du ber mobile, le dispositif proposé permet d'obtenir à coup sûr et automatiquement le positionnement précis indispensable du centre S, bien qu'utilisant une surface de référence torique formée à froid et traitée thermiquement, et donc présentant de ce fait des distorsions géométriques inévitables. Par ailleurs, la cote radiale d'épaisseur maximum du segment entre les bers fixes et la surface sphérique rectifiée par la meule conditionne l'encombrement radial maximum des deux segments montés sur un tourillon qui s'assemblent entre des chemins de roulement du joint coulissant. Le procédé et le dispositif selon l'invention garantissent parfaitement cette cote radiale, ce qui assure un assemblage du joint avec le minimum de jeu, sans risque de blocage par interférence mécanique. Enfin, la rectification par génération utilisée, assure d'une manière durable l'exécution d'une sphéricité parfaite des portées sphériques concaves. La surface de coupe de la meule se profile d'elle-même pendant le travail.

Les traces de rectification observables sur la portée sphérique concave terminée sont curvilignes inclinées sur le plan médian du tore, et par place entrecroisées. Elles ne sont pas de révolution comme c'est le cas pour une rectification d'intérieur conventionnelle. Cette caractéristique est favorable à la réduction de rugosité de la portée sphérique concave et à l'établissement du film micrométrique hydrodynamique de lubrifiant lors du fonctionnement du joint en utilisation.

Bien entendu, l'invention n'est pas limitée aux exemples décrits et représentés.

En particulier, on a représenté différents exemples dont chacun se caractérise par un mode particulier de fixation du segment et un mode particulier d'usinage. Il est possible de combiner différemment les modes particuliers de fixation du segment et les modes particuliers d'usinage.

En ce qui concerne le mouvement relatif de balayage autour de deux axes (exemple des figures 17 et 18), on peut envisager d'autres structures pratiques assurant un positionnement précis des axes et une possibilité de résorber les jeux. Les mouvements d'oscillation autour des deux axes peuvent être commandés par des générateurs d'oscillation électromagnétiques.

Les procédés et dispositifs de maintien en position des segments sont utilisables en vue par exemple d'usiner une portée intérieure de tourillonnement cylindrique, pour des joints homocinétiques de type différent de ceux décrits au début, ou encore pour usiner une portée sphérique dont le centre coïnciderait avec celui de la surface extérieure de roulement.

## Revendications

1. Procédé de finition d'une portée sphérique concave (10) sur un segment de galet (14) ayant une surface extérieure de roulement (18), notamment segment de galet pour joint de transmission pour automobile, caractérisé en ce que :
   – on immobilise le segment (14) en appui de sa surface extérieure de roulement contre des moyens d'appui (17) ;
   – on fait tourner autour d'un axe (MS ; XX') passant par le centre (S) voulu pour la portée sphérique (10) un outil (23) du genre meule ou analogue comportant une surface active (23a) de génération de sphère concave, et on établit entre les moyens d'appui (17) et le segment (14) d'une part, et l'outil (23) d'autre part, un mouvement relatif de balayage autour d'au moins un axe (ZZ' ; XX' ; YY') coupant l'axe de rotation (MS ; XX') de l'outil (23) au centre (S) voulu pour la portée sphérique (10) ; et
   – on fait avancer l'outil (23) le long de son axe de rotation (MS ; XX') vers le segment jusqu'à ce que la distance entre la portée sphérique (10) et le centre (S) voulu pour celle-ci soit égale au rayon (P) voulu pour la portée sphérique (10).

2. Procédé selon la revendication 1, caractérisé en ce qu'on utilise comme moyens d'appui deux bers de positionnement (17) solidaires l'un de l'autre et espacés circonférentiellement l'un de l'autre.

3. Procédé conforme à la revendication 2, caractérisé en ce qu'on applique à chaque extrémité (22) du segment (14) un effort de compression (G) ayant une orientation sensiblement tangentielle relativement à l'axe (UU') de la surface extérieure de roulement (18).

4. Procédé conforme à l'une des revendications 2 ou 3, appliqué à un segment de galet dont la surface extérieure de roulement a un profil transversal arrondi, caractérisé en ce que pour immobiliser le segment (14) à l'égard des rotations autour d'un axe (VV') passant sensiblement par les deux bers de positionnement (17), on applique sur la surface extérieure de roulement (18) un troisième ber (19) mobile par rapport aux deux bers de positionnement (17) selon une direction sensiblement radiale relativement à l'axe (UU') de la surface extérieure de roulement (18).

5. Procédé conforme à la revendication 4, caractérisé en ce qu'on applique le troisième ber (19) sensiblement à mi-distance entre les deux bers de positionnement (17).

6. Procédé conforme à la revendication 1, caractérisé en ce que :
– on place la surface extérieure de roulement (18) contre deux bers de positionnement (17) solidaires l'un de l'autre et espacés circonférentiellement l'un de l'autre ;
– on applique à chaque extrémité (22) du segment un effort de compression (G) ayant une orientation sensiblement tangentielle relativement à l'axe (UU') de la surface extérieure de roulement (18) ; et
– on applique sensiblement à mi-longueur circonférentielle du segment (14) un effort (D) dirigé radialement vers l'intérieur de la surface extérieure de roulement (18).

7. Procédé conforme à l'une des revendications 1 à 6, caractérisé en ce que pour réaliser une portée sphérique (10) dont le centre (S) est écarté de l'axe (UU') de la surface extérieure de roulement (18), on positionne angulairement le segment autour de l'axe (UU') de sa surface extérieure de roulement par rapport aux bers de positionnement (17).

8. Procédé conforme à la revendication 7, caractérisé en ce que pour appliquer un effort de compression (G) à chaque extrémité (22) du segment (14) et en même temps positionner angulairement le segment autour de l'axe (UU') de sa surface extérieure de roulement (18), on appuie l'une des extrémités (22) du segment (14) contre une griffe (21a) immobilisée à l'égard des déplacements circonférentiels, cet appui étant réalisé en faisant agir sur l'autre extrémié (22b) du segment (14) une griffe (21b) mobile circonférentiellement.

9. Procédé conforme à la revendication 7, caractérisé en ce que pour appliquer un effort de compression (G) à chaque extrémité (22) du segment (14) et en même temps positionner angulairement le segment autour de l'axe (UU') de sa surface extérieure de roulement (18), on applique sur lesdites extrémités deux griffes (21) qui, par rapport aux bers de positionnement (17), sont mobiles ensemble sensiblement parallèlement à un axe médian du segment (14).

10. Procédé conforme à l'une des revendications 1 à 9, caractérisé en ce que pour créer le mouvement relatif de balayage entre l'outil (23) d'une part, et les moyens d'appui (17) et le segment (14) d'autre part, on déplace le segment (14) et les moyens d'appui (17) en va-et-vient autour d'un axe (ZZ', YY') passant par le centre (S) voulu pour la portée sphérique (10)

11. Procédé conforme à l'une des revendications 1 à 9, caractérisé en ce que pour créer le mouvement relatif de balayage entre l'outil (23) d'une part et les moyens d'appui (17) et le segment (14) d'autre part, on fait tourner le segment (14) et les moyens d'appui (17) autour d'un axe (XX') traversant le segment (14) et passant par le centre (S) voulu pour la portée sphérique (10).

12. Procédé conforme à l'une des revendications 1 à 9, caractérisé en ce que pour créer le mouvement de balayage entre l'outil (23) d'une part et les moyens d'appui (17) et le segment (14) d'autre part, on combine deux mouvements de va-et-vient du segment (14) et des moyens d'appui (17) par rapport à l'outil (23) autour de deux axes (ZZ', YY') se coupant au centre (S) voulu pour la portée sphérique (10).

13. Procédé conforme à l'une des revendications 1 à 12, caractérisé en ce que l'axe (MS) autour duquel on fait tourner l'outil (23) est oblique par rapport à l'axe (ZZ', YY', XX') autour duquel on établit le mouvement relatif de balayage rotatif.

14. Procédé conforme à l'une des revendications 1 à 10, caractérisé en ce qu'à chaque instant, on ne fait agir la surface active de l'outil (23) que sur une partie de la portée sphérique (10) en cours d'usinage, et on détecte la position d'une autre partie de la portée sphérique (10), et en ce qu'on commande l'arrêt de l'usinage lorsque l'on détecte pour ladite autre partie de la portée sphérique (10) une position correspondant à une distance égale au rayon (P) de la portée sphérique (10) entre la portée sphérique (10) et le centre (S) voulu pour celle-ci.

15. Procédé conforme à la revendication 14, caractérisé en ce qu'on emploie comme outil un outil de type "boisseau" (23) ayant un alésage central (23d), ladite autre partie de la portée sphérique étant située face à l'alésage central (23d) de l'outil (23).

16. Procédé conforme à la revendication 14, caractérisé en ce qu'on applique une touche (25) d'un palpeur de position (24) contre ladite autre partie de la portée sphérique (10).

17. Procédé conforme à la revendication 16, caractérisé en ce qu'on applique la touche à travers un alésage central (23d) de l'outil (23).

18. Procédé conforme à la revendication 17, caractérisé en ce qu'on applique la touche (25) au moyen d'un bras (24) s'étendant entre un bord latéral (10b) du segment (14) et une région (23b) de la surface active (23a) de l'outil (23) qui est hors de contact avec la portée sphérique (10) en train d'être usinée.

19. Dispositif pour la finition d'une portée sphérique concave (10) sur un segment de galet (14) ayant une surface extérieure de roulement (18), notamment segment de galet pour joint de transmission pour automobile, caractérisé en ce qu'il comprend :

- un bâti (31) ;
- une monture (16, 17, 19, 21) supportée par le bâti et par rapport à laquelle le segment de galet (14) peut être immobilisé avec un centre (T) et/ou un axe (UU') de sa surface extérieure de roulement (18) en position déterminée par rapport à ladite monture ;
- un outil rotatif (23) du genre meule ou analogue (23) présentant une surface active (23a) de génération de sphère concave centrée sur un axe de rotation (MS) de la meule (23) ;
- des moyens pour créer entre l'outil (23) d'une part et le segment (14) et la monture d'autre part un mouvement relatif de balayage rotatif autour d'au moins un axe (ZZ' ; YY' ; XX') coupant l'axe (MS ; XX') de rotation de l'outil (23) au centre (S) voulu pour la partie sphérique (10) ;
- des moyens (202) pour déplacer l'outil (23) le long de son axe géomètrique de rotation (MS) ;
- des moyens (202) pour interrompre l'avance de l'outil (23) le long de son axe de rotation (MS) lorsque le centre réel de la portée sphérique coïncide sensiblement avec le centre (S) voulu.

20. Dispositif conforme à la revendication 19, caractérisé en ce que le centre (S) voulu pour la portée sphérique (10), tel que défini par l'intersection de l'axe (MS) de rotation de l'outil (23) et de l'axe (ZZ' ; XX' ; YY') dudit mouvement relatif de balayage rotatif, est situé à distance de l'axe (UU') de la surface extérieure de roulement (18).

21. Dispositif conforme à l'une des revendications 19 ou 20, caractérisé en ce que la monture comprend deux bers (17) de positionnement de la surface extérieure de roulement (18), fixes l'un par rapport à l'autre, et espacés l'un de l'autre le long de la direction circonférentielle du segment (14).

22. Dispositif conforme à la revendication 21, cractérisé en ce que la monture comprend des moyens (19) pour immobiliser le segment (14) par rapport à la monture à l'égard de la rotation autour d'un axe géomètrique (VV') passant sensiblement par les deux bers (17).

23. Dispositif conforme à la revendication 22, caractérisé en ce que les moyens pour immobiliser le segment à l'égard des rotations autour d'un axe (VV') passant sensiblement par les deux bers de positionnement (17) comprennent un troisième ber (19) mobile par rapport aux bers de positionnement (17) ainsi que des moyens (44, 96) pour solliciter le troisième ber (19) en appui contre la surface extérieure de roulement (18).

24. Dispositif conforme à l'une des revendications 21 à 23, caractérisé en ce que certains au moins des bers (17, 19) présentent deux surfaces d'appui (28) présentant entre elles un espacement (28a) parallèle à l'axe (UU') de la surface extérieure de roulement (18).

25. Dispositif conforme à l'une des revendications 19 à 24, caractérisé en ce qu'il comprend des moyens (21 ; 21a, 21b) pour appliquer aux extrémités (22) du segment (14) des forces (G) de compression ayant une orientation sensiblement tangentielle par rapport à l'axe (UU') de la surface extérieure de roulement (18).

26. Dispositif conforme à la revendication 25, caractérisé en ce qu'il comprend des moyens (19) pour appliquer au segment (14), sensiblement à mi-longueur circonférentielle de la surface extérieure de roulement (18), un effort (D) dirigé vers l'axe (UU') de la surface extérieure de roulement (18);

27. Dispositif conforme à l'une des revendications 25 ou 26, caractérisé en ce que les moyens (21) pour appliquer aux extrémités (22) du segment (14) lesdites forces (G) de compression sont conçus pour positionner le segment par rapport à la monture à l'égard de la rotation autour de l'axe (UU') de la surface extérieure de roulement (18).

28. Dispositif conforme à l'une des revendications 19 à 25, caractérisé en ce que la monture comprend des moyens pour positionner le segment par rapport à la monture à l'égard de la rotation autour de l'axe de la surface de roulement.

29. Dispositif conforme à l'une des revendications 19 à 28, caractérisé en ce qu'au titre des moyens pour créer un mouvement relatif de balayage rotatif entre l'outil (23) d'une part et le segment (14) et la monture (16, 17, 19, 21) d'autre part, la monture comprend un arbre creux (29) monté à pivotement dans un alésage du bâti et à l'intérieur duquel pivote un moyen (39) de verrouillage sélectif du segment (14) relativement à la monture (16, 17, 19, 21a, 21b).

30. Dispositif conforme à l'une des revendications 19 à 29, caractérisé en ce que les moyens pour créer un mouvement relatif de balayage rotatif autour d'au moins un axe entre l'outil (23) d'une part et le segment (14) et la monture d'autre part comprennent un montage à la cardan entre la monture et le bâti (31).

31. Dispositif conforme à l'une des revendications 19 à 30, caractérisé en ce que les moyens pour détecter la position de la portée sphérique (10) en cours d'usinage par rapport au centre (S) voulu pour elle comprennent un palpeur (24) destiné à venir en contact avec le segment (14) en une région de la portée sphérique (10) écartée de la surface active de l'outil (23).

32. Dispositif conforme à la revendication 31, caractérisé en ce que l'outil (23) est du type boisseau comprenant un alésage axial (23d) traversant la surface active (23a), et en ce que le palpeur (24) comprend une tige de transmission (24b), montée axialement coulissante dans l'alésage (23d) de l'outil et dans un alésage axial (57) d'un arbre porte outil (56) entraîné en rotation par des moyens d'entraînement périphériques (59), la tige de transmission s'étendant entre un détecteur (62, 63) et une touche (25) destinée à venir en contact avec la portée sphérique (10) en cours d'usinage.

33. Dispositif conforme à l'une des revendications 31 ou 32, cractérisé en ce que le palpeur (24) est positionné de manière que la touche (25) soit en permanence en contact avec la portés sphérique (10) en cours d'usinage au cours du mouvement rotatif de balayage.

## Claims

1. A method of finishing a concave spherical bearing surface (10) on a roller segment (14) having an external rolling surface (18), more particularly a roller segment for a motor vehicle transmission joint, characterized in that:
   – the segment (14) is immobilized with its external rolling surface bearing against support means (17);
   – a tool (23) of the grinding wheel or similar type, which has an operative surface (23a) generating a concave sphere, is rotated about an axis (MS; XX′) passing through the centre (S) desired for the spherical bearing surface (10), and between the support means (17) and the segment (14) on the one hand, and the tool (23) on the other, a relative sweeping movement is established about at least one axis (ZZ′; XX′; YY′) intersecting the axis of rotation (MS; XX′) of the tool (23) at the centre (S) desired for the spherical bearing surface (10); and
   – the tool (23) is infed along its axis of rotation (MS; XX′) toward the segment until the distance between the spherical bearing surface (10) and the centre (S) desired for the latter is equal to the radius (P) desired for the spherical bearing surface (10).

2. A method according to claim 1, characterized in that the support means used comprise two positioning seats (17) connected to one another and circumferentially spaced apart from one another.

3. A method according to claim 2, characterized in that at each end (22) of the segment (14) a compressive force (G) is applied which is directed substantially tangentially in relation to the axis (UU′) of the external rolling surface (18).

4. A method according to one of claims 2 or 3, applied to a roller segment whose external rolling surface has a rounded transverse profile, characterized in that to immobilize the segment (14) in respect of rotation about an axis (VV′) substantially passing through the two positioning seats (17), a third seat (19) which is movable in relation to the two positioning seats (17) in a substantially radial direction in relation to the axis (UU′) of the external rolling surface (18) is applied against the external rolling surface (18).

5. A method according to claim 4, characterized in that the third seat (19) is applied substantially at mid-distance between two positioning seats (17).

6. A method according to claim 1, characterized in that:
   – the outer rolling surface (18) is placed against two positioning seats (17) attached to one another and circumferentially spaced out from one another;
   – at each end (22) of the segment a compressive force (G) directed substantially tangentially in relation to the axis (UU′) of the external rolling surface (18) is applied; and
   – a force (D) directed radially towards the interior of the external rolling surface (18) is applied substantially at the circumferential mid-length of the segment (14).

7. A method according to one of claims 1 to 6, characterized in that to produce a spherical bearing surface (10) whose centre (S) is remote from the axis (UU′) of the external rolling surface (18), the segment is angularly positioned about the axis (UU′) of its external rolling surface in relation to the positioning seats (17).

8. A method according to claim 7, characterized in that to apply a compressive force (G) to each end (22) of the segment (14) and at the same time to position the segment angularly about the axis (UU′) of its external rolling surface (18), one of the ends (22) of the segment (14) is supported against a claw (21a) immobilized in respect of circumferential displacements, this support being achieved by causing a circumferential immovable claw (21b) to act on the other end (22b) of the segment (14).

9. A method according to claim 7, characterized in that to apply a compressive force (G) to each end (22) of the segment (14) and at the same time to position the segment angularly about the axis (UU′) of its external rolling surface (18), two claws (21), which in relation to the positioning seats (17) are jointly movable substantially parallel with a median axis of the segment (14), are applied to said ends.

10. A method according to one of claims 1 to 9, characterized in that to create a relative sweeping movement between the tool (23) on the one hand and the support mpeans (17) and the segment (14) on the other, the segment (14) and the support means (17) are moved reciprocably about an axis (ZZ′, YY′) passing through the centre (S) desired for the spherical bearing surface (10).

11. A method according to one of claims 1 to 9, characterized in that to create the relative sweeping movement between the tool (23) on the one hand the support means (17) and the segment (14) on the other, the segment (14) and the support means (17) are turned about on axis (XX′) passing through the segment (14) and passing through the centre (S) desired for the spherical bearing surface (10).

12. A method according to one of claims 1 to 9, characterized in that to create the sweeping movement between the tool (23) on the one hand and the support means (17) and the segment (14) on the other, two reciprocating movements of the segment (14) and of the support means (17), relative to the tool (23), about two axes (ZZ', YY') intersecting at the centre (S) desired for the spherical bearing surface (10) are combined.

13. A method according to one of claims 1 to 12, characterized in that the axis (MS) about which the tool (23) is turned is oblique in relation to the axis (ZZ', YY', XX') about which the relative rotary sweeping movement is created.

14. A method according to one of claims 1 to 10, characterized in that at any given moment the operative surface of the tool (23) is caused to act only on a part of the spherical bearing surface (10) undergoing machining, and the position of another part of the spherical bearing surface (10) is detected, and the machining is halted when for said other part of the spherical bearing surface (10) a position is detected which correspond to a distance equal to the radius (P) of the spherical bearing surface (10) between the spherical bearing surface (10) and the centre (S) desired therefor.

15. A method according to claim 14, characterized in that the tool used is a "cup" type tool (23) having a central bore (23d), said other part of the spherical bearing surface being situated facing the central bore (23d) of the tool (23).

16. A method according to claim 14, characterized in that a prod (25) of a position sensor (24) is applied to said other part of the spherical bearing surface (10).

17. A method according to claim 16, characterized in that the prod is applied through a central bore (23d) of the tool (23).

18. A method according to claim 17, characterized in that the prod (25) is applied by means of an arùm (24) extending between a lateral edge (10b) of the segment (14) and a zone (23b) of the operative surface (23a) of the tool (23) which is out of contact with the spherical bearing surface (10) being machined.

19. A device for finishing a concave spherical bearing surface (10) on a roller segment (14) having an external rolling surface (18), more particularly a roller segment for a motor vehicle transmission joint, characterized in that it comprises:
   – a frame (31);
   – a mount (16, 17, 19, 21) supported by the frame and in relation to which the roller segment (14) can be immobilized with a centre (T) and/or an axis (UU') of its external rolling surface (18) in a determined position in relation to said mount;
   – a rotary tool (23) of the grinding wheel or similar type (23) having an operative surface (23a) generating a concave sphere centred on an axis of rotation (MS) of the grinding wheel (23);
   – means for creating between the tool (23) on the one hand and the segment (14) and the mount on the other, a relative rotational sweeping movement about at least one axis (ZZ'; YY'; XX') intersecting the axis (MS; XX') of rotation of the tool (23) at the centre (S) desired for the spherical part (10);
   – means (202) for moving the tool (23) along its geometrical axis of rotation (MS);
   – means (202) for interrupting the infeed of the tool (23) along its axis of rotation (MS) when the real centre of the spherical bearing surface substantially coincides with the required centre (S).

20. A device according to claim 19, characterized in that the centre (S) required for the spherical bearing surface (10), as defined by the intersection of the axis rotation (MS) of the tool (23) and of the axis (ZZ', XX'; YY') of said relative rotary sweeping movment is situated at a distance from the axis (UU') of the external rolling surface (18).

21. A device according to one of claims 19 or 20, characterized in that the mount is provided with two seats (17) positioning the external rolling surface (18) which are fixed relative to one another and spaced out from one another along the circumferential direction of the segment (14).

22. A device according to claim 21, characterized in that the mount is provided with means (19) for immobilizing the segment (14) in relation to the mount in respect of rotation around a geometrical axis (VV') passing substantially through the two seats (17).

23. A device according to claim 22, characterized in that the means for immobilizing the segment in respect of rotation about an axis (VV') substantilly passing through the two positioning seats (17) comprise a third seat (19) which is movable in relation to the positioning seats, as well as means (44, 96) for urging the third seat (19) to bear against the external rolling surface (18).

24. A device according to one of claims 21 to 23, characterized in that at leat some of the seats (17, 19) have two support surfaces (28) forming between themselves a space (28a) parallel with the axis (UU') of the external rolling surface (18).

25. A device according to one of claims 19 to 24, characterized in that it is provided with means (21; 21a; 21b) for applying to the end (22) of the segment (14) compressive forces (G) directed substantially tangentially in relation to the axis (UU') of the external rolling surface (18).

26. A device according to claim 25, characterized in that it is provided with means (19) for applying to the segment (14), substantially at circumferencial midlendth of the external rolling surface (18), a force (D) directed towards the axis (UU') of the external rolling surface (18).

27. A device according to one of claims 25 or 26, characterized in that the means (21) for applying said compressive forces (G) to the ends (22) of the segment (14) are designed to position the segment, relative to the mount, in respect of rotation about the axis (UU') of the external rolling surface (18).

28. A device according to one of claims 19 to 25, characterized in that the mount is provided with means for positioning the segment, relative to the mount, in respect of rotation about the axis of the rolling surface.

29. A device according to one of claims 19 to 28, characterized in that to serve as means for creating a relative rotational sweeping movement between the tool (23) on the one hand and the segment (14) and the mount (16, 17, 19, 21) on the other, the mount is provided with a hollow shaft (29) pivotably mounted in a bore in the frame and inside which a means (39) pivots for the selective locking of the segment (14) in relation to the mount (16, 17, 19, 21a, 21b).

30. A device according to one of claims 19 to 29, characterized in that the means for creating a relative rotational sweeping movement about at least one axis between the tool (23) on the one hand and the segment (14) and the mount on the other consist of a universal joint arrangement between the mount and the frame (31).

31. A device according to one of claims 19 to 30, characterized in that the means for detecting the position of the spherical bearing surface (10) undergoing machining, relative to the centre (S) desired for said surface comprise a sensor (24) intended to come into contact with the segment (14) in a zone of the spherical bearing surface (10) remote from the operative surface of the tool (23).

32. A device according to claim 31, characterized in that the tool (23) is of the cup type having an axial bore (23d) passing through the operative surface (23a), and the sensor (24) is provided with a transmission rod (24b) mounted for axial sliding in the bore (23d) of the tool and in an axial bore (57) of a tool carrier shaft (56) driven rotationally by peripheral drive means (59), the transmission rod extending between a detector (62, 63) and a prod (25) adapted to come into contact with the spherical bearing surface (10) being machined.

33. A device according to one of claims 31 or 32, characterized in that the sensor (24) is so positioned that the prod (25) is in permanent contact with the spherical bearing surface (10) being machined during the rotary sweeping movement.

**Patentansprüche**

1. Verfahren zur Fertigbearbeitung einer konkavsphärischen Fläche (10) an einem Rollensegment (14) mit einer Außenlauffläche (18), insbesondere einem Rollensegment für ein Antriebsgelenk eines Kraftfahrzeugs, dadurch gekennzeichnet,
– daß das Segment (14) durch Abstützen seiner Außenlauffläche gegen Haltemittel (17) fixiert wird;
– daß ein Werkzeug (23) nach Art einer Schleifscheibe oder dergleichen, mit einer aktiven Oberfläche (23a) zur Erzeugung einer konkaven Fläche um eine Achse (MS; XX'), die durch den für die sphärische Fläche gewünschten Mittelpunkt (S) geht, angetrieben wird, und zwischen den Haltemitteln (17) und dem Segment (14) einerseits und dem Werkzeug (23) andererseits eine relative Schwenkbewegung um zumindest eine Achse (ZZ', XX', YY'), die die Rotationsachse (MS; XX') des Werkzeuges (23) in dem für die sphärische Fläche (10) gewünschten Mittelpunkt (S) schneidet, eingeleitet wird; und
– daß das Werkzeug (23) entlang seiner Rotationsachse (MS; XX') zum Segment hin verschoben wird, bis der bestand zwischen der sphärischen Fläche (10) und dem für diese Fläche gewünschten Mittelpunkt (S) dem für die sphärische Fläche gewünschten Radius (P) entspricht.

2. Verfahren nach Anspruch 1, dadurch gekennzeichnet, daß als Haltemittel zwei zusammenhängende Positionierhalter (17) mit Umfangsabstand verwendet werden.

3. Verfahren nach Anspruch 2, dadurch gekennzeichnet, daß an jedem Ende (22) des Segments (14) eine Druckbeanspruchung (G) ungefähr tangential zum Verlauf der Achse (UU') der Außenlauffläche (18) ausgeübt wird.

4. Verfahren nach einem der Ansprüche 2 oder 3, angewandt an einem Rollensegment, dessen Außenlauffläche ein abgerundetes Querschnittsprofil hat, dadurch gekennzeichnet, daß zur Fixierung des Segments (14) gegenüber einer Rotation um eine Achse (W'), die ungefähr durch die beiden Positionierhalter (17) geht, auf die Außenlauffläche (18) ein dritter Halter (19) angebracht wird, der zu den beiden Positionierhaltern (17) in einer Richtung verfahrbar ist, die zur Achse (UU') der Außenlauffläche (18) ungefähr radial verläuft.

5. Verfahren nach Anspruch 4, dadurch gekennzeichnet, daß der dritte Halter (19) ungefähr auf halber Distanz zwischen den beiden Positionierhaltern (17) angebracht wird.

6. Verfahren nach Anspruch 1, dadurch gekennzeichnet,
– daß die Außenlauffläche (18) gegen zwei Positionierhalter (17) zur Anlage gebracht wird, die relativ zueinander ortsfest und mit Umfangsabstand angeordnet sind;
– daß an jedem Ende (22) des Segments eine Druckbeanspruchung (G) ungefähr tangential zum Verlauf der Achse (UU') der Außenlauffläche (18) ausgeübt wird; und

– daß ungefähr auf der halben Länge des Umfangs des Segments (14) eine Kraft (D) radial nach innen auf die Außenlauffläche (18) aufgebracht wird.

7. Verfahren nach einem der Ansprüche 1 bis 6, dadurch gekennzeichnet, daß zur Erzeugung einer sphärischen Fläche (10), deren Mittelpunkt (S) von der Achse (UU′) der Außenlauffläche (18) entfernt liegt, das Segment um einen Winkel um die Achse (UU′) seiner Außenlauffläche gedreht zu den Positionierhaltern (17) positioniert wird.

8. Verfahren nach Anspruch 7, dadurch gekennzeichnet, daß zum Aufbringen einer Druckbeanspruchung (D) an Jedem Ende (22) des Segments (14) und gleichzeitig für die Winkelpositionierung des Segments um die Achse (UU′) seiner Außenlauffläche (18) eines der Enden (22) des Segments (14) gegen einen Greifer (21a) der hinsichtlich einer Verschiebung in Umfangsrichtung fixiert ist, abgestützt wird, wobei diese Abstützung durch Einwirkung eines in Umfangsrichtung verschiebbaren Greifers (21b) auf das andere Ende (22b) erreicht wird.

9. Verfahren nach Anspruch 7, dadurch gekennzeichnet, daß zum Aufbringen einer Druckbeanspruchung (D) an jedem Ende (22) des Segments (14) und gleichzeitig für die Winkelpositionierung des Segments um die Achse (UU′) seiner Außenlauffläche (18) an den genannten Enden zwei Greifer (21) angebracht werden, die relativ zu den Positionierhaltern (17) gemeinsam im wesentlichen parallel zu einer Mittelachse des Segments (14) verschiebbar sind.

10. Verfahren nach einem der Ansprüche 1 bis 9, dadurch gekennzeichnet, daß zur Erzeugung der relativen Schwenkbewegung zwischen dem Werkzeug (23) einerseits und den Haltemitteln (17) und dem Segment (14) andererseits, das Segment (14) und die Haltemittel (17) um eine Achse (ZZ′, YY′), die durch den für die sphärische Fläche (10) gewünschten Mittelpunkt (S) verläuft, hin- und hergeschwenkt werden.

11. Verfahren nach einem der Ansprüche 1 bis 9, dadurch gekennzeichnet, daß zur Erzeugung der relativen Schwenkbewegung zwischen dem Werkzeug (23) einerseits und den Haltemitteln (17) und dem Segment (14) andererseits, das Segment (14) und die Haltemittel (17) um eine Achse (XX′), die das Segment (14) kreuzt und durch den für die sphärische Fläche (10) gewünschten Mittelpunlt (S) verläuft, rotierend angetrieben wird.

12. Verfahren nach einem der Ansprüche 1 bis 9, dadurch gekennzeichnet, daß zur Erzeugung der Schwenkbewegung zwischen dem Werkzeug (23) einerseits und den Haltemitteln (17) und dem Segment (14) andererseits zwei Hin- und Herbewegungen des Segments (14) und der Haltemittel (17) gegenüber dem Werkzeug (23) um zwei Achsen (ZZ′, YY′), die einander im für die sphärische Fläche (10) gewünschten Mittelpunkt (S) schneiden, kombiniert werden.

13. Verfahren nach einem der Ansprüche 1 bis 12, dadurch gekennzeichnet, daß die Achse (MS), um die das Werkzeug (23) rotierend angetrieben wird, schräg zur Achse (ZZ′, YY′, XX′) steht, um die die relative rotierende Schwenkbewegung erzeugt wird.

14. Verfahren nach einem der Ansprüche 1 bis 10, dadurch gekennzeichnet, daß die aktive Oberfläche des Werkzeuges (23) jeweils nur auf einen Teil der sphärischen Fläche (10) während der Bearbeitung einwirkt, wahrend gleichzeitig die Position eines anderen Teils der sphärischen Fläche (10) ermittelt wird, und daß die Bearbeitung gestoppt wird, wenn für den erwähnten anderen Teil der sphärischen Fläche (10) eine Position ermittelt wurde, die einer Distanz gleich dem Radius (P) der sphärischen Fläche (10) zwischen der sphärischen Fläche (10) und dem für diese gewünschten Mittelpunkt (S) entspricht.

15. Verfahren nach Anspruch 14, dadurch gekennzeichnet, daß als Werkzeug ein Werkzeug des Typs "Kaminbauformstein" (23) mit einer Bohrung in der Mitte (23d) verwendet wird, wobei sich der erwähnte andere Teil der sphärischen Fläche vor der Mittenbohrung (23d) des Werkzeugs (23) befindet.

16. Verfahren nach Anspruch 14, dadurch gekennzeichnet, daß ein Taster (25) eines Wegfühlers (24) gegen den erwähnten anderen Teil der sphärischen Fläche (10) in Kontakt gebracht wird.

17. Verfahren nach Anspruch 16, dadurch gekennzeichnet, daß der Taster durch eine Mittenbohrung (23d) des Werkzeuges (23) in Kontakt gebracht wird.

18. Verfahren nach Anspruch 17, dadurch gekennzeichnet, daß der Taster (25) mit Hilfe eines Armes (24), der von einem Seitenrand (10b) des Segmentes (14) in einen Bereich (23b) der aktiven Oberfläche (23a) des Werkzeuges (23) reicht und die in Bearbeitung befindliche sphärische Fläche (10) nicht berührt, in Kontakt gebracht wird.

19. Vorrichtung zur Erzeugung einer konkavsphärischen Fläche (10) auf einem Rollensegment (14) mit einer Außenlauffläche (18), insbesondere ein Rollensegment für ein Antriebsgelenk eines Kraftfahrzeugs, dadurch gekennzeichnet, daß sie folgende Elemente umfaßt:

– ein Gestell (31), einen Rahmen (16,17,19,21), der vom Gestell getragen wird und in bezug auf den das Rollensegment (14) mit einem Mittelpunkt (T) und/oder einer Achse (UU′) seiner Außenlauffläche (18) in einer bestimmten Position zu dem erwähnten Rahmen fixiert werden kann;

– ein rotierendes Werkzeug (23) nach Art einer Schleifscheibe oder dergleichen, mit einer aktiven Oberfläche (23a) zur Erzeugung einer konkaven Fläche, die sphärisch zur Rotationsachse (MS) der Schleifscheibe (23) angeordnet ist;

– Mittel zur Erzeugung einer relativen rotierenden Schwenkbewegung zwischen dem Werkzeug (23) einerseits und dem Segment (14) und dem Rahmen andererseits um mindestens eine Achse (ZZ', YY', XX'), die die Rotationsachse (MS; XX') des Werkzeuges (23) in dem für die sphärische Fläche (10) gewünschten Mittelpunkt (S) schneidet, auszuführen;

– Mittel (202) zum Verschieben des Werkzeuges (23) entlang seiner geometrischen Rotationsachse (MS);

– Mittel (202) zur Unterbrechung des Werkzeugvorschubs (23) entlang seiner Rotationsachse (MS), wenn der tatsächliche Mittelpunkt der sphärischen Fläche im wesentlichen mit dem gewünschten Mittelpunkt (S) zusammenfällt.

20. Vorrichtung nach Anspruch 19, dadurch gekennzeichnet, daß sich der für die sphärische Fläche (10) gewünschte Mittelpunkt (S), definiert durch den Schnitt der Rotationsachse (MS) des Werkzeuges (23) und der Achse (ZZ', YY', XX') der erwähnten relativen rotierenden Schwenkbewegung, von der Achse (UU') der Außenlauffläche (18) entfernt liegt.

21. Vorrichtung nach einem der Ansprüche 19 oder 20, dadurch gekennzeichnet, daß der Rahmen zwei Positionierhalter (17) für die Außenlauffläche (18) besitzt, die zueinander ortsfest und mit bestand in Umfangsrichtung des Segments (14) voneinander angeordnet sind.

22. Vorrichtung nach Anspruch 21, dadurch gekennzeichnet, daß der Rahmen Mittel (19) umfaßt, um das Segment (14) gegenüber dem Rahmen hinsichtlich der Rotation um eine geometrische Achse (VV'), die ungefähr durch die beiden Halter (17) verläuft, festzusetzen.

23. Vorrichtung nach Anspruch 22, dadurch gekennzeichnet, daß die Mittel zum Festsetzen des Segments hinsichtlich der Rotation um eine Achse (VV'), die ungefähr durch die beiden Positionierhalter (17) verläuft, einen dritten, zu den Positionierhaltern (17) verschiebbaren Halter (19) sowie Mittel (44,96) zur Belastung des dritten Halters (19) im Anschlag gegen die Außenlauffläche (18) umfaßt.

24. Vorrichtung nach einem der Ansprüche 21 bis 23, dadurch gekennzeichnet, daß zumindest einige der Halter (17,19) zwei Stützflächen (28) mit einem bestand (28a) zueinander parallel zur Achse (UU') der Außenlauffläche (18) aufweisen.

25. Vorrichtung nach einem der Ansprüche 19 bis 24, dadurch gekennzeichnet, daß sie Mittel (21; 21a, 21b) zum Aufbringen von Druckkräften (G) an den Enden (22) des Segments (14) ungefähr in tangentialer Richtung zur Achse (UU') der Außenlauffläche (18) umfaßt.

26. Vorrichtung nach Anspruch 25, dadurch gekennzeichnet, daß Mittel (19) zum Aufbringen einer Kraft (D) auf das Segment (14) ungefähr auf der halben Umfangslänge der Außenlauffläche (18) in Richtung der Achse (UU') der Außenlauffläche (18) vorgesehen sind.

27. Vorrichtung nach einem der Ansprüche 25 oder 16, dadurch gekennzeichnet, daß die Mittel (21) zum Aufbringen der erwähnten Druckkräfte (G) auf die Enden (22) des Segments (14) so ausgelegt sind, daß das Segment zum Rahmen hinsichtlich einer Rotation um die Achse (UU') der Außenlauffläche (18) positioniert wird.

28. Vorrichtung nach einem der Ansprüche 19 bis 25, dadurch gekennzeichnet, daß der Rahmen Mittel zum Positionieren des Segments zum Rahmen hinsichtlich einer Rotation um die Achse der Außenlauffläche umfaßt.

29. Vorrichtung nach einem der Ansprüche 19 bis 28, dadurch gekennzeichnet, daß im Zusammenhang mit den Mitteln zur Erzeugung einer relativen rotierenden Schwenkbewegung zwischen dem Werkzeug (23) einerseits un dem Segment (14) und dem Rahmen (16,17,19,21) andererseits der Rahmen eine Hohlwelle (29 besitzt, die in einer Bohrung des Gestells schwenkbar angeordnet ist, und in deren Inneren Mittel für eine selektive Verriegelung (39) des Segments (14) relativ zum Rahmen (16,17,19, 21a,21b) gelagert sind.

30. Vorrichtung nach einem der Ansprüche 19 bis 29, dadurch gekennzeichnet, daß die Mittel zur Erzeugung einer relativen rotierenden Schwenkbewegung um zumindest eine Achse zwischen dem Werkzeug (23) einerseits und dem Segment (14) und dem Rahmen andererseits eine kardanische Aufhängung zwischen dem Rahmen und dem Gestell (31) umfassen.

31. Vorrichtung nach einem der Ansprüche 19 bis 30, dadurch gekennzeichnet, daß die Mittel zur Ermittlung der Position der in Bearbeitung befindlichen sphärischen Fläche (10) in bezug auf den für diese Fläche gewünschten Mittelpunkt (S) einen Fühler (24) zur Aufnahme des Kontakts mit dem Segment (14) in einem mit bestand von der aktiven Oberfläche des Werkzeuges (23) liegenden Bereich der sphärischen Fläche (10) umfassen.

32. Vorrichtung nach Anspruch 31, dadurch gekennzeichnet, daß das Werkzeug (23) vom Typ "Kaminbauformstein" ist und eine Axialbohrung (23d) besitzt, die die aktive Oberfläche (23a) durchdringt und daß der Fühler (24) eine Kraftübertragungsstange (24b) umfaßt, die axial verschiebbar in der Werkzeugbohrung (23d) und in einer Axialbohrung (57) einer Werkzeugspindel (56) angeordnet ist, die durch am Umfang liegende Antriebselemente rotierend angetrieben wird, wobei die Kraftübertragungsstange von einem Detektor (62,63) bis zu einem Taster (25) für einen Kontakt mit der in Bearbeitung befindlichen sphärischen Fläche (10), reicht.

33. Vorrichtung nach einem der Ansprüche 31 oder 32, dadurch gekennzeichnet, daß der Fühler (24) so positioniert ist, daß die Taste (25) permanent die in Bearbeitung befindliche sphärische Fläche (10) während der rotierenden Schwenkbewegung berührt.

FIG. 1

FIG. 2

FIG. 3

EP 0 371 833 B1

EP 0 371 833 B1

FIG_5

FIG_4

FIG_6

FIG_7

FIG.4A

FIG. 8

FIG. 9

FIG. 10

EP 0 371 833 B1

FIG.11

FIG.13

FIG.12

EP 0 371 833 B1

FIG.14

FIG.15

FIG.16

23

FIG_18

103

106
107

104

105

108

94

10

18

X
—
W

S

X'
—
W'

14

16

99

23

107

31

106

Z'

100

100

31

Y

95

94

22a

21a

14

G

17

10

108

16

19

104

XVIII

x
—
W

D

S

105

XVIII

x'
—
W'

B

T

97

B

ZZ'

18

99

96

G

17

22b

FIG_17

21b

Y'

24

FIG. 20

FIG. 19